# EUROPÄISCHE PATENTSCHRIFT

(11) **EP 2 772 976 B1**
(45) Veröffentlichungstag und Bekanntmachung des Hinweises auf die Patenterteilung: **15.11.2017**
(21) Anmeldenummer: 13156984.0
(22) Anmeldetag: 27.02.2013
(51) Int. Cl.: H01M 8/18, H01M 8/04, H01M 8/06, C25B 1/04, H01M 8/08

(54) **Regeneratives Brennstoffzellensystem mit Gasreinigung**
Regenerative fuel cell system with gas purification
Système régénératif de piles à combustible avec purification de gaz

(43) Veröffentlichungstag der Anmeldung: 03.09.2014
(73) Patentinhaber: Airbus Defence and Space GmbH, 82024 Taufkirchen (DE)
(72) Erfinder: Jehle, Walter, 88263 Horgenzell (DE); Markgraf, Sebastian, 88090 Immenstaad (DE); Lucas, Dr. Joachim, 88634 Herdwangen-Schönach (DE)
(74) Vertreter: Daub, Thomas

(56) Entgegenhaltungen:
- EP-A1- 1 674 424
- CA-A1- 1 198 710
- DE-A1-102007 027 720
- US-A1- 2002 119 365
- US-A1- 2008 213 635
- US-A1- 2009 008 261

## Beschreibung

### Stand der Technik

Die Erfindung betrifft eine Redox-Vorrichtung, insbesondere eine Wasserstoff-Sauerstoff-Redox-Vorrichtung, mit zumindest einer Redox-Einheit, insbesondere einer Wasserstoff-Sauerstoff-Redox-Einheit, die zur Durchführung zumindest einer Redoxreaktion unter Verbrauch und/oder Erzeugung von einem ersten Gas, insbesondere von Wasserstoffgas, und/oder von einem zweiten Gas, insbesondere von Sauerstoffgas, vorgesehen ist, nach dem Oberbegriff des Anspruchs 1.

Brennstoffzellen und Elektrolyseure nach dem Stand der Technik, insbesondere Brennstoffzellen und Elektrolyseure, die Wasserstoff, Sauerstoff und Wasser als Produkte oder Edukte verwenden, werden in einem Ruhemodus, in dem sie nicht betrieben werden, mittels eines Spülprozesses mit Luft oder neutralen Gasen ausgespült, um einen Aufbau von explosionsfähigen Gemischen wie beispielsweise Knallgas-Mischungen durch in dem Ruhemodus in Gasräume der Brennstoffzelle oder des Elektrolyseurs verbliebenen Restgase zu vermeiden. Ein solcher Spülprozess ist jedoch bei den gegenwärtig in Entwicklung befindlichen sogenannten Regenerativen Brennstoffzellsystemen, die aus einem System aus einer Brennstoffzelle und einem Elektrolyseur bestehen und für eine Verwendung in einem sogenannten geschlossenen Betrieb als ein Akkumulatorsystem vorgesehen sind, nicht anwendbar, da er eine Öffnung des Regenerativen Brennstoffzellsystems erfordern würde. Gerade ein solches Regeneratives Brennstoffzellsystem ist jedoch einer Gefährdung durch Knallgas besonders ausgesetzt, da während einer Aufladung des Regenerativen Brennstoffzellsystems lediglich der Elektrolyseur in Betrieb ist und die Brennstoffzelle in einem Ruhemodus befindlich ist und umgekehrt bei einer Entladung des Regenerativen Brennstoffzellsystems nur die Brennstoffzelle in Betrieb und der Elektrolyseur in einen Ruhemodus versetzt ist.

Die Aufgabe der Erfindung besteht insbesondere darin, eine gattungsgemäße Redox-Vorrichtung bereitzustellen, die ohne einen Spülprozess einen Aufbau von Schadgas, insbesondere Knallgas, vermeidet. Ferner besteht das Ziel der Erfindung darin, eine Redox-Vorrichtung zur Verfügung zu stellen, die in einem geschlossenen Betrieb langfristig ohne Gefährdung durch Entwicklung von Knallgas betrieben werden kann. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Redox-Vorrichtung, insbesondere einer Wasserstoff-Sauerstoff-Redox-Vorrichtung, mit zumindest einer Redox-Einheit, insbesondere einer Wasserstoff-Sauerstoff-Redox-Einheit, die zur Durchführung zumindest einer Redoxreaktion unter Verbrauch und/oder Erzeugung von einem ersten Gas, insbesondere von Wasserstoffgas, und/oder von einem zweiten Gas, insbesondere von Sauerstoffgas, vorgesehen ist.

Es wird vorgeschlagen, dass die Redox-Vorrichtung zumindest eine Restgasreinigungseinheit, die zumindest in zumindest einem Ruhemodus der Redox-Einheit zumindest ein Restgas in der Redox-Einheit von zumindest einer Gasverunreinigung reinigt, umfasst.

Unter einer "Redox-Vorrichtung" soll insbesondere eine Vorrichtung mit zumindest einer Redox-Einheit verstanden werden. Unter einer "Redox-Einheit" soll eine Einheit mit zumindest zwei Elektroden, die als zumindest eine Anode und zumindest eine Kathode ausgebildet sind, mit einem die zwei Elektroden verbindenden Stromkreis, mit zumindest einem zumindest zwischen den zwei Elektroden angeordneten Elektrolyt und/oder mit zumindest einer zwischen den zwei Elektroden angeordneten elektrolytgefüllten oder ionenleitenden Membran verstanden werden, wobei mittels der Einheit eine Redox-Reaktion durchgeführt wird, bei der unter Energieabgabe in Form von elektrischer Leistung, die über den Stromkreis abgegeben wird, das erste Gas oxidiert und das zweite Gas reduziert und in einer Reaktion zu einem Produktstoff, vorzugsweise Wasser, umgesetzt werden, welcher in eine Umgebung oder einen Speichertank abgeben wird, oder bei der unter Aufwendung von Energie in Form elektrischer Leistung ein Eduktstoff, vorzugsweise Wasser, zu einer Erzeugung von einem ersten Gas, vorzugsweise molekularem Wasserstoff, und einem zweiten Gas, vorzugsweise molekularem Sauerstoff, gespalten wird und das erste Gas und das zweite Gas in die Umgebung oder in Speichertanks abgeführt werden. Insbesondere ist die Redox-Einheit als eine Brennstoffzelle, in der unter Energieabgabe durch Stromerzeugung molekularer Wasserstoff, vorzugsweise in Form von Wasserstoffgas, und molekularer Sauerstoff, vorzugsweise in Form von Sauerstoffgas, zu Wasser reagieren, und/oder als ein Elektrolyseur für Wasserstoff und Sauerstoff, in dem unter Energieaufnahme durch einen elektrischen Strom Wasser in molekularen Sauerstoff und molekularen Wasserstoff gespalten wird, ausgebildet. Alternativ kann die Wasserstoff-Sauerstoff-Redox-Einheit zu einer Verwendung von anderen chemischen Stoffen, welche Wasserstoffatome und Sauerstoffatome aufweisen, anstelle von Wasser, molekularem Wasserstoff und/oder molekularem Sauerstoff als Produkt- und/oder Eduktstoff ausgebildet sein. Weiterhin kann die Redox-Einheit anstatt als Wasserstoff-Sauerstoff-Redox-Einheit als eine Redox-Einheit für andere chemische Stoffe, die die anderen chemischen Stoffe in einer zu der Redoxreaktion der Wasserstoff-Sauerstoff-Redox-Einheit ähnlichen Redoxreaktion umsetzt, ausgebildet sein, beispielsweise als eine Kohlenmonoxid-Sauerstoff-Redox-Einheit, die Kohlenmonoxid und Sauerstoffgas zu Kohlendioxid umsetzt oder Kohlendioxid spaltet. Unter einer "Redox-Reaktion" soll insbesondere eine Reaktion verstanden werden, bei der zumindest zwei chemische Stoffe miteinander reagieren, wobei zumindest ein chemischer Stoff Elektronen abgibt und somit oxidiert wird, und zumindest ein chemischer Stoff Elektronen aufnimmt und somit reduziert wird. Unter "Wasserstoffgas" soll insbesondere Wasserstoff in molekularer Form, der als Gas vorliegt, verstanden werden. Unter "Sauerstoffgas" soll insbesondere Sauerstoff in molekularer Form, der als Gas vorliegt, verstanden werden. Unter einem "Elektrolyt" soll insbesondere ein ionenleitender Stoff, vorzugsweise in Form einer Lösung, beispielsweise einer alkalischen Lösung, verstanden werden.

Insbesondere kann die Redox-Vorrichtung als ein sogenanntes regeneratives Brennstoffzellsystem ausgebildet sein, das zumindest eine Brennstoffzelle und zumindest einen an die zumindest eine Brennstoffzelle gekoppelten Elektrolyseur für Wasserstoff und Sauerstoff aufweist, wobei in einem Aufladevorgang zu einer Energiespeicherung in dem regenerativen Brennstoffzellsystem mittels eines angelegten äußeren elektrischen Stroms der zumindest eine Elektrolyseur für Wasserstoff und Sauerstoff Wasser aus einem Wasservorrat in molekularen Wasserstoff und molekularen Sauerstoff spaltet, wobei der molekulare Wasserstoff und der molekulare Sauerstoff jeweils in Speichertanks abgeführt wird und in einem Entladevorgang zu einer Energieabgabe über elektrischen Strom molekularer Wasserstoff und molekularer Sauerstoff in der zumindest einen Brennstoffzelle in einer Redoxreaktion zu Wasser umgesetzt werden. Das regenerative Brennstoffzellsystem erfüllt somit eine Akkumulatorfunktion. Insbesondere kann das Regenerative Brennstoffzellsystem für einen geschlossenen Betrieb ausgebildet sein. Unter einem "geschlossenen Betrieb" soll insbesondere ein Betrieb verstanden werden, bei dem das Regenerative Brennstoffzellsystem über eine Vielzahl von Auflade-Entlade-Zyklen ohne Stoffaustausch mit einer Umgebung betrieben wird. Unter einem "Betrieb ohne Stoffaustausch mit der Umgebung" soll insbesondere verstanden werden, dass das Regenerative Brennstoffzellsystem mit einem Anfangsvorrat von Wasser und/oder molekularem Sauerstoff und/oder molekularem Wasserstoff in Speichertanks ausgestattet ist, wobei über die Vielzahl von Auflade-Entlade-Zyklen lediglich der Anfangsvorrat an Wasser und/oder molekularem Sauerstoff und/oder molekularem Wasserstoff umgesetzt wird und eine Ergänzung des Anfangsvorrats nicht stattfindet. Insbesondere ist bei einem Betrieb ohne Stoffaustausch mit der Umgebung eine Entnahme der Speichertanks nicht vorgesehen. Grundsätzlich kann das regenerative Brennstoffzellsystem jedoch mit entnehmbaren Speichern ausgebildet sein, sodass es zusätzlich zu einer Akkumulatorfunktion im geschlossenen Betrieb auch eine Funktion als Ladestation zur Bereitstellung gefüllter Speichertanks für eine weitere Brennstoffzelle übernimmt.

Unter einer "Restgasreinigungseinheit" soll insbesondere eine Einheit verstanden werden, die ein Restgas von Verunreinigungen, insbesondere von Feststoffen oder Fremdgasen, beispielsweise durch Filtern, reinigt. Insbesondere umfasst die Restgasreinigungseinheit zumindest eine Einheit, die zumindest eine Gassorte kondensiert, um sie aus einem Gasstrom zu entfernen, und/oder zumindest eine Einheit, die zumindest eine Gassorte aus dem Gasstrom filtert, und/oder zumindest eine Einheit, in der mittels einer Katalyse zumindest eine Gassorte zu zumindest einer weiteren Gassorte umgesetzt wird, wobei die zumindest einer weitere Gassorte zu einer Entfernung aus dem Gasstrom, insbesondere zu einer Ausfilterung und/oder Kondensation, vorgesehen sein kann. Vorzugsweise ist die zumindest eine Restgasreinigungseinheit frei von Einheiten und/oder Elementen, die zu einer Entfernung der Verunreinigungen aus dem Restgas einen erschöpfbaren Vorrat an Materialien, insbesondere Reaktionsmaterialien und/oder Bindematerialien zu einer Reaktion und/oder Bindung einer Verunreinigung, benötigen. Unter einem "Restgas" soll insbesondere eine Gasmenge in einer Redox-Einheit verstanden werden, die in einem Ruhemodus der Redox-Einheit in Gasräumen der Redox-Einheit verbleibt. Unter einem "Ruhemodus einer Redox-Einheit" soll insbesondere zumindest ein Betriebszustand einer Redox-Einheit verstanden werden, der frei ist von einer Durchführung der Redoxreaktion oder bei dem eine Redoxreaktion mit einer stark verringerten Leistung gegenüber einem Normalbetriebsmodus, beispielsweise einer maximal zehnprozentigen Leistung, vorteilhaft einer maximal fünfprozentigen Leistung und bevorzugt einer maximal einprozentigen Leistung gegenüber einem Normalbetriebsmodus, stattfindet. Unter einem "Ruhemodus einer Redox-Vorrichtung" soll insbesondere zumindest ein Betriebszustand einer Redox-Vorrichtung verstanden werden, in dem die Redox-Vorrichtung mit einem äußeren Stromkreis unverbunden ist. Es kann insbesondere eine Redox-Vorrichtung mit einer hohen Betriebssicherheit und einem verminderten operativen Aufwand durch Einsparung eines Vorrats an inertem Spülgas und eines Durchlaufs von inertem Spülgas erreicht werden.

Des Weiteren wird vorgeschlagen, dass die zumindest eine Redox-Einheit als eine Brennstoffzelle ausgebildet ist. Es kann insbesondere eine Brennstoffzelle mit einer hohen Betriebssicherheit erreicht werden.

In einer Weiterbildung der Erfindung wird vorgeschlagen, dass die Brennstoffzelle als alkalische Brennstoffzelle ausgebildet ist. Unter einer "alkalischen Brennstoffzelle" soll insbesondere eine Brennstoffzelle verstanden werden, welche eine alkalische Lösung, insbesondere eine Kaliumhydroxid-Lösung, als Elektrolyt verwendet. Eine Verwendung anderer alkalischer Lösungen als Elektrolyt, beispielsweise Hydrazin, ist ebenfalls möglich. Vorzugsweise bestehen die Wasserstoffelektrode und die Sauerstoffelektrode zumindest teilweise aus Nickel. Es kann insbesondere eine alkalische Brennstoffzelle mit einer hohen Betriebssicherheit und einem verminderten operativen Aufwand durch Einsparung eines Vorrats an inertem Spülgas und eines Durchlaufs von inertem Spülgas erreicht werden.

Weiterhin wird vorgeschlagen, dass die zumindest eine Redox-Einheit als Elektrolyseur zur Erzeugung von Wasserstoffgas und/oder Sauerstoffgas ausgebildet ist. Vorzugsweise ist der Elektrolyseur als alkalischer Elektrolyseur ausgebildet, der als Elektrolyt eine in einer Membran fixierte Kaliumhydroxid-Lösung verwendet. Grundsätzlich kann der Elektrolyseur anstatt zur Erzeugung von Wasserstoffgas und/oder Sauerstoffgas auch zu einer Erzeugung anderer Gase durch elektrolytische Spaltung eines Eduktstoffs ausgebildet sein. Insbesondere kann der Elektrolyseur mit entnehmbar gelagerten Speichertanks verbunden sein, die von dem Elektrolyseur mit Wasserstoffgas und/oder Sauerstoffgas befüllt werden und zu einem Betrieb einer Brennstoffzelle, beispielsweise in einem Auto, mit der Brennstoffzelle verbunden werden. Es kann insbesondere ein Elektrolyseur zur Erzeugung von Wasserstoffgas und/oder Sauerstoffgas mit einer hohen Betriebssicherheit und einem verminderten operativen Aufwand durch Einsparung eines Vorrats an inertem Spülgas und eines Durchlaufs von inertem Spülgas erreicht werden.

Ferner wird vorgeschlagen, dass die zumindest eine Restgasreinigungseinheit zumindest eine Katalysatoreinheit zu einer Katalyse einer Reaktion von Sauerstoffgas und Wasserstoffgas zu Wasser umfasst. Unter einer "Katalysatoreinheit" soll insbesondere eine Einheit verstanden werden, die dazu vorgesehen ist, an einer vorgesehenen Stelle zumindest eine bestimmte Reaktion, beispielsweise eine Reaktion von Wasserstoff und Sauerstoff zu Wasser, zu katalysieren. Insbesondere stellt die Katalysatoreinheit zumindest eine Oberfläche zur Verfügung, an der die Reaktion erleichtert stattfinden kann, beispielsweise eine Oberfläche mit einer hohen Affinität zu molekularem Wasserstoff und molekularem Sauerstoff, so dass an der Oberfläche eine Reaktionswahrscheinlichkeit für die Reaktion von Wasserstoffgas und Sauerstoffgas zu Wasser erhöht ist. Insbesondere umfasst die Katalysatoreinheit zumindest ein Katalysatorelement, das vorzugsweise zumindest teilweise aus einem für die Reaktion von Sauerstoffgas und Wasserstoffgas zu Wasser katalytisch wirksamen Material besteht. Es kann insbesondere mit einem geringen apparativen Aufwand eine wirksame Restgasreinigungseinheit erreicht werden.

In einer Weiterbildung der Erfindung wird vorgeschlagen, dass die zumindest eine Katalysatoreinheit zumindest ein Katalysatorelement aufweist, das zumindest teilweise aus einem Platinmetall besteht. Insbesondere weist das zumindest eine Katalysatorelement zumindest teilweise eine Beschichtung mit einem Platinmetall auf zumindest einer Oberfläche auf. Grundsätzlich kann das zumindest eine Katalysatorelement auch vollständig aus einem und/oder aus mehreren Platinmetallen bestehen. Unter einem "Platinmetall" soll insbesondere Platin oder ein anderes Edelmetall verstanden werden, das sich chemisch ähnlich wie Platin verhält, insbesondere Ruthenium, Rhodium, Palladium, Osmium oder Iridium. Insbesondere sind Nickel und Darmstadtium als Elemente der sogenannten Platingruppe verschieden von Platinmetallen. Es kann insbesondere ein chemisch resistentes Katalysatorelement mit einer hohen Katalyseleistung erreicht werden. Des Weiteren wird vorgeschlagen, dass das zumindest eine Katalysatorelement eine Hohlraumstruktur aufweist. Unter einer "Hohlraumstruktur" soll insbesondere eine Struktur verstanden werden, die zumindest einen Hohlraum, vorzugsweise eine Vielzahl von Hohlräumen aufweist, durch den oder durch die Gase von einer Seite der Struktur zu einer anderen Seite der Struktur diffundieren und/oder strömen können. Insbesondere ist die Vielzahl von Hohlräumen von Poren gebildet. Das eine Hohlraumstruktur aufweisende Katalysatorelement kann grundsätzlich auch als Kanäle ausgebildete Hohlräume und/oder eine Gitternetzstruktur aufweisen. Besonders bevorzugt sind innere Oberflächen der Hohlräume mit einer katalytisch wirksamen Beschichtung aus einem Platinmetall versehen. Es kann insbesondere ein Katalysatorelement mit einem hohen Anteil einer katalytisch wirksamen Oberfläche und somit einer hohen Reinigungsleistung erreicht werden. Erfindungsgemäß wird vorgeschlagen, dass die zumindest eine Restgasreinigungseinheit zumindest einen Kondensatabscheider zur Abscheidung von Wasserdampf umfasst. Unter einem "Kondensatabscheider" soll insbesondere eine Einheit verstanden werden, die dazu vorgesehen ist, mittels Teileinheiten und/oder Elementen zumindest eine gasförmige Verunreinigung durch Kondensation aus einem Gasstrom abzutrennen. Insbesondere umfasst der zumindest eine Kondensatabscheider zumindest einen Wärmetauscher und zumindest ein Separator, der zumindest eine Oberfläche zu einer Kondensation bereitstellt. Insbesondere ist der Kondensatabscheider zu einer Entfernung von Wasserdampf durch Kondensation vorgesehen. Es kann insbesondere eine apparativ einfache Einheit zu einer Entfernung zumindest einer Verunreinigung aus einem Gasstrom von Restgas erreicht werden.

Weiterhin erfindungsgemäß wird vorgeschlagen, dass die erfindungsgemäße Redox-Vorrichtung zumindest einen Restgaskreislauf zu einer kontinuierlichen Umwälzung des zumindest einen Restgases in dem Ruhemodus der Redox-Einheit über die zumindest eine Restgasreinigungseinheit umfasst. Unter einem "Restgaskreislauf" soll insbesondere ein Gaskreislauf von zumindest einem Gasraum einer Redox-Einheit zu dem zumindest einen Gasraum der Redox-Einheit verstanden werden, wobei ein Gasstrom in dem Restgaskreislauf zumindest teilweise über zumindest eine Restgasreinigungseinheit geleitet wird. Insbesondere umfasst der zumindest eine Restgaskreislauf zumindest eine Fördereinrichtung zur Umwälzung des Gases, beispielsweise zumindest eine Pumpe. Es kann insbesondere eine Redox-Vorrichtung mit einer besonders hohen Sicherheit gegenüber einer Gefährdung durch Knallgasbildung erreicht werden.

Des Weiteren wird erfindungsgemäß vorgeschlagen, dass die zumindest eine Restgasreinigungseinheit zu einer Reinigung von zumindest einem Eduktgas oder zumindest einem Produktgas während zumindest eines von dem Ruhemodus verschiedenen Betriebszustands der zumindest einen Redox-Einheit vorgesehen ist. Insbesondere kann die zumindest eine Restgasreinigungseinheit dazu vorgesehen sein, das zumindest eine Eduktgas vor und/oder bei einem Eintritt in Gasräume der zumindest einen Redox-Einheit oder das zumindest eine Produktgas vor und/oder bei einer Speicherung zu reinigen. Insbesondere kann das zumindest eine Eduktgas und/oder das zumindest eine Produktgas von Wasserstoffgas, Sauerstoffgas und/oder von Wasser in gasförmiger Form gebildet sein. Es kann insbesondere eine Gefährdung und/oder Effizienzabnahme der Redoxreaktion in der Redox-Einheit verringert und/oder vermieden werden.

In einer Weiterbildung der Erfindung wird vorgeschlagen, dass die Redox-Vorrichtung zumindest eine weitere Redox-Einheit, die mit der zumindest einen Redox-Einheit stofflich gekoppelt ist, umfasst. Unter "stofflich gekoppelt" soll insbesondere verstanden werden, dass Produktstoffe der zumindest einen Redox-Einheit als Eduktstoffe der zumindest einen weiteren Redox-Einheit genutzt werden und Produktstoffe der zumindest einen weiteren Redox-Einheit als Eduktstoffe der einen Redox-Einheit genutzt werden und/oder dass die zumindest eine Redox-Einheit und die zumindest eine weitere Redox-Einheit einen gemeinsamen Eduktvorrat und/oder Produktvorrat aufweisen und ein Strom von Eduktstoffen in mehreren gleichartig ausgebildeten Redox-Einheiten geführt wird. Es kann insbesondere eine Nutzung nicht vollständig umgesetzter Eduktstoffe erreicht oder ein Regeneratives Brennstoffzellensystem bereitgestellt werden.

Weiterhin wird vorgeschlagen, dass die zumindest eine Redox-Einheit und die zumindest eine weitere Redox-Einheit als ein Brennstoffzellen-Elektrolyseur-Paar ausgebildet sind. Insbesondere bilden die zumindest eine Redox-Einheit und die zumindest eine weitere Redox-Einheit somit ein sogenanntes Regeneratives Brennstoffzellsystem. Es kann insbesondere eine Akkufunktion der Redox-Vorrichtung erreicht werden

Ferner wird vorgeschlagen, dass die zumindest eine Redox-Einheit und die zumindest eine weitere Redox-Einheit zumindest über einen gemeinsamen Speichertank verbunden sind. Unter einem "Speichertank" soll insbesondere ein Tank für zumindest ein Gas und/oder für zumindest eine Flüssigkeit verstanden werden. Insbesondere ist der gemeinsame Speichertank dazu vorgesehen, von der zumindest einen Redox-Einheit und/oder der zumindest einen weiteren Redox-Einheit mit einem Produktgas gefüllt zu werden, das von der zumindest einen weiteren Redox-Einheit und/oder der zumindest einen Redox-Einheit als Eduktgas verwendet wird. Insbesondere wird das zumindest eine Produktgas vor einem Eintritt in den gemeinsamen Speichertank mittels der zumindest einen Restgasreinigungseinheit von Verunreinigungen gereinigt oder das zumindest eine Eduktgas wird vor einem Eintritt in einen Gasraum nach einem Austritt aus dem gemeinsamen Speichertank mittels der zumindest einen Restgasreinigungseinheit gereinigt. Insbesondere kann Wasser in dem gemeinsamen Speichertank in gasförmiger oder flüssiger Form eingeführt und in flüssiger Form gespeichert und abgeführt werden. Es kann insbesondere eine Verringerung einer Anzahl benötigter Speichertanks erreicht werden.

Ferner wird ein Verfahren zum Betrieb einer erfindungsgemäßen Redox-Vorrichtung, insbesondere einer Wasserstoff-Sauerstoff-Redox-Vorrichtung, vorgeschlagen, bei dem zumindest in zumindest einem Ruhemodus der Redox-Einheit zumindest ein Restgas in der Redox-Einheit durch zumindest eine Restgasreinigungseinheit von zumindest einer Gasverunreinigung gereinigt wird. Es kann insbesondere ein Betrieb einer Redox-Vorrichtung mit einer hohen Betriebssicherheit erreicht werden.

Es wird erfindungsgemäß ein Verfahren zum Betrieb einer erfindungsgemäßen Redox-Vorrichtung mit zumindest einer Redox-Einheit, insbesondere einer Wasserstoff-Sauerstoff-Redox-Vorrichtung, und zumindest einer weiteren Redox-Einheit, insbesondere einer weiteren Wasserstoff-Sauerstoff-Redox-Einheit, vorgeschlagen, bei dem die Redox-Vorrichtung geschlossen betrieben wird. Darunter, dass "die Redox-Vorrichtung geschlossen betrieben wird", soll insbesondere verstanden werden, dass die Redox-Vorrichtung über eine Vielzahl von Lade-Entlade-Zyklen ohne Stoffaustausch von Wasserstoff, Sauerstoff und/oder Wasser mit der Umgebung betrieben wird. Unter einem "Lade-Entlade-Zyklus" soll insbesondere ein Zyklus verstanden werden, bei dem zumindest in zumindest einem Vorgangsschritt die Redox-Vorrichtung mit einer äußeren Stromquelle verbunden ist und ein Elektrolyseur der Redox-Vorrichtung mittels der äußeren Stromquelle betrieben wird, um Wasser in Wasserstoff und Sauerstoff zu spalten, und in zumindest einem weiteren Vorgangsschritt die Redox-Vorrichtung mit einem äußeren Stromabnehmer verbunden ist und über einen Betrieb einer Brennstoffzelle dem äußeren Stromabnehmer Strom zur Verfügung stellt. Es kann insbesondere eine Akkufunktion der Redox-Vorrichtung und ein Verzicht auf aufwendige Nachfüllung von Wasserstoff und Sauerstoff zu einer Stromerzeugung mittels einer Brennstoffzelle erreicht werden.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine erfindungsgemäße Redox-Vorrichtung, die eine als alkalische Brennstoffzelle ausgebildete Redox-Einheit umfasst, mit zwei Restgasreinigungseinheiten, die jeweils einen Restgaskreislauf umfassen,
- Fig. 2: eine alternative erfindungsgemäße Redox-Vorrichtung, die eine als alkalischer Elektrolyseur ausgebildete Redox-Einheit umfasst, und mit zwei Restgasreinigungseinheiten, die jeweils einen Restgaskreislauf umfassen, und
- Fig. 3: eine alternative erfindungsgemäße Redox-Vorrichtung mit einer als alkalische Brennstoffzelle ausgebildeten Redox-Einheit und mit einer als alkalischer Elektrolyseur ausgebildeten Redox-Einheit, die in einem geschlossenen Betrieb betrieben werden, und mit vier Restgasreinigungseinheiten, die jeweils einen Restgaskreislauf umfassen.

### Beschreibung der Ausführungsbeispiele

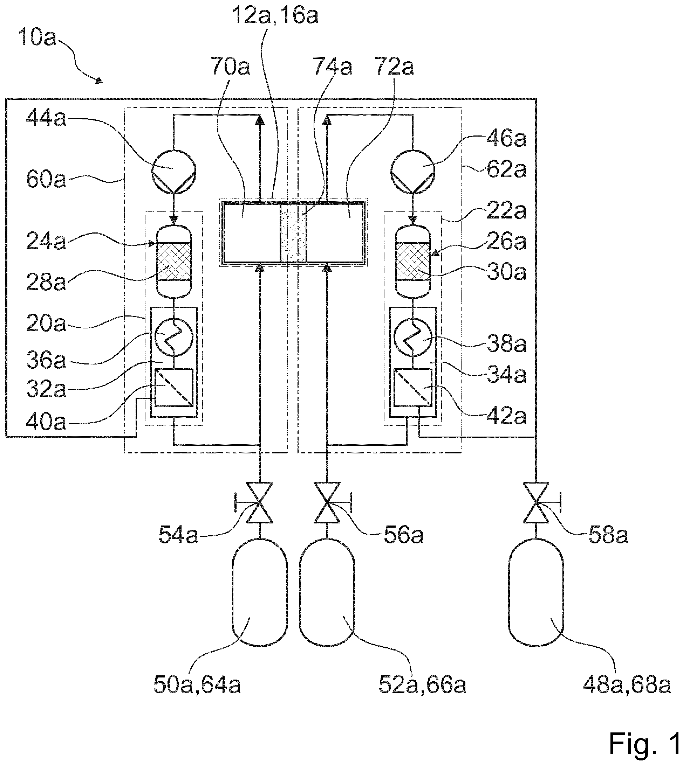

Figur1 zeigt eine erfindungsgemäße Redox-Vorrichtung 10a, die als Wasserstoff-Sauerstoff-Redox-Vorrichtung ausgeführt ist, mit einer als Wasserstoff-Sauerstoff-Redox-Einheit ausgeführten Redox-Einheit 12a, die zur Durchführung einer Redoxreaktion unter Verbrauch von Wasserstoffgas als ein erstes Gas, und von Sauerstoffgas als ein zweites Gas vorgesehen ist. Die Redox-Einheit 12a ist als eine Brennstoffzelle 16a, genauer als eine alkalische Brennstoffzelle 16a, welche eine wässrige Kaliumhydroxid- Lösung als Elektrolyt verwendet, ausgeführt und wird bei einer Betriebstemperatur in einem Temperaturbereich von 80 °C bis 200 °C betrieben wird. Die erfindungsgemäße Redox-Vorrichtung 10a umfasst zwei Restgasreinigungseinheiten 20a, 22a, die in einem Ruhemodus der Redox-Einheit 12a jeweils ein Restgas in der Redox-Einheit 12a von Gasverunreinigungen reinigen. Die Brennstoffzelle 16a umfasst zwei Gasräume 70a, 72a, die durch eine elektrolytgefüllte Elektroden-Membran-Elektroden-Anordnung 74a voneinander getrennt sind. In der Elektroden-Membran-Elektroden-Anordnung 74a ist eine Membran durch zwei Blockelektroden begrenzt, die in einem Stromkreis mit einem nicht dargestellten äußeren Stromabnehmer verbunden werden können. In den Gasraum 70a wird in einem Betriebsmodus durch ein geöffnetes Ventil 54a Wasserstoff aus einem als Wasserstoffspeicher 50a ausgebildeten Speichertank 64a eingeführt, in den Gasraum 72a durch ein geöffnetes Ventil 56a wird Sauerstoff aus einem als Sauerstoffspeicher 52a ausgebildeten Speichertank 66a eingeführt. In einer Reaktionszone der Elektroden-Membran-Elektroden-Anordnung 74a, die dem Gasraum 70a zugewandt ist, findet eine Redoxreaktion von Wasserstoffmolekülen des Wasserstoffgases mit Hydroxidionen des Elektrolyts zu Wasser statt, bei der Elektronen freiwerden, welche in einem elektrischen Strom über den äußeren Stromabnehmer abfließen. In einer Reaktionszone der Elektroden-Membran-Elektroden-Anordnung 74a, die dem Gasraum 72a zugewandt ist, findet eine Redoxreaktion von Sauerstoffmolekülen des Sauerstoffgases mit Wasser, das von dem Elektrolyt stammen oder zuvor in der Brennstoffzelle 16a erzeugt worden sein kann, statt, bei der die Sauerstoffatome der Sauerstoffmoleküle reduziert und unter Aufnahme von Elektronen zu Hydroxidionen umgesetzt werden. Eine Gesamtreaktion in den Reaktionszonen produziert dabei Wasser, da in der dem Gasraum 70a zugewandten Reaktionszone mehr Wassermoleküle erzeugt werden als in der dem Gasraum 72a zugewandten Reaktionszone mit Sauerstoffgas zu Hydroxidionen umgesetzt werden. Entstehendes Wasser wird in Form von Wasserdampf über Gasströme von überschüssigen Wasserstoffgas und Sauerstoffgas abgeführt.

Die Restgasreinigungseinheiten 20a, 22a sind dazu vorgesehen, in dem Ruhemodus Restgas, das in den Gasräumen 70a, 72a verblieben ist, von Verunreinigungen zu reinigen. Die Restgasreinigungseinheit 20a reinigt in dem Ruhemodus Wasserstoff-Restgas aus dem Gasraum 70a von Verunreinigungen durch Sauerstoffgas, das durch die Elektroden-Membran-Elektroden-Anordnung 74a aus dem Gasraum 72a diffundiert ist, und durch Wasserdampf. Die Restgasreinigungseinheit 22a reinigt analog dazu in dem Ruhemodus Sauerstoff-Restgas aus dem Gasraum 72a von Verunreinigungen durch Wasserstoffgas und Wasserdampf. Die Redox-Vorrichtung 10a umfasst zwei Restgaskreisläufe 60a, 62a zu einer kontinuierlichen Umwälzung der Restgase in dem Ruhemodus der Redox-Einheit 12a über die Restgasreinigungseinheiten 20a, 22a. In den Restgaskreisläufen 60a, 62a wird jeweils mittels einer als Pumpe 44a, 46a ausgebildeten Fördereinheit das Restgas umgepumpt. Die Restgasreinigungseinheiten 20a, 22a sind zudem zu einer Reinigung von Eduktgasen während eines von dem Ruhemodus verschiedenen Betriebszustands der Redox-Einheit 12a vorgesehen und reinigen überschüssiges eingeleitetes Wasserstoffgas und Sauerstoffgas, das in dem Betriebszustand aus den Gasräumen 70a, 72a durch die Restgaskreisläufe 60a, 62a über die Restgasreinigungseinheiten 20a, 22a geleitet wird.

Die Restgasreinigungseinheiten 20a, 22a umfassen jeweils eine Katalysatoreinheit 24a, 26a zu einer Katalyse einer Reaktion von Sauerstoffgas und Wasserstoffgas zu Wasser, die jeweils ein Katalysatorelement 28a, 30a aufweisen, das teilweise aus einem Platinmetall besteht. Die Katalysatorelemente 28a, 30a weisen jeweils eine als eine Porenstruktur in einem Trägermaterial ausgeführte Hohlraumstruktur auf. Oberflächen der Porenstruktur des Katalysatorelements 28a, 30a sind mit Platin beschichtet, wobei grundsätzlich anstelle von Platin ein anderes Platinmetall wie beispielsweise Palladium oder Iridium verwendet werden kann. Die Katalysatorelemente 28a, 30a stellen eine große platinbeschichtete Oberfläche zur Verfügung, die Wasserstoffmoleküle und Sauerstoffmoleküle binden kann und somit eine Reaktionswahrscheinlichkeit für eine Reaktion zu Wasser erhöht. Verunreinigungen durch Fremdgas werden somit durch die Katalysatoreinheiten 24a, 26a aus dem Restgas entfernt. Die Katalysatoreinheiten 24a, 26a können Verbindungsleitungen zu dem Wasserspeicher 48a aufweisen, die Wasser in flüssiger Form abführen. Alternativ kann durch ein separates Heizelement und/oder eine Temperatur der Redox-Einheit 12a das Wasser zu Wasserdampf verdampft oder eine Kondensation des Wassers verhindert werden, so dass das Wasser in einem stromabwärts gelegenen Abschnitt der Restgaskreisläufe 60a, 62a abgetrennt wird. Die Restgasreinigungseinheiten 20a, 22a umfassen jeweils einen Kondensatabscheider 32a, 34a zur Abscheidung von Wasserdampf, die jeweils einen Wärmetauscher 36a, 38a zu einer Kühlung des Restgases und einen Separator 40a, 42a aufweisen. Mittels des Wärmetauschers 36a, 38a und des Separators 40a, 42a wird Wasserdampf aus dem Restgas kondensiert und abgetrennt. Die Kondensatabscheider 32a, 34a sind über Leitungen mit einem als Wasserspeicher 48a ausgebildeten Speichertank 68a verbunden, wobei die Leitungen in einem Ruhemodus durch Schließung eines Ventils 58a geschlossen wird. Zu Beginn des Ruhemodus, in dem keine oder nur eine stark verminderte Redoxreaktion der alkalischen Brennstoffzelle 16a stattfindet, werden die Ventile 54a, 56a geschlossen. Über die Kondensatabscheider 32a, 34a wird somit das in der Redoxreaktion entstandene Wasser von der Brennstoffzelle 16a zu dem Wasserspeicher 48a zur Speicherung geführt.

In einem Verfahren zum Betrieb der Redox-Vorrichtung 10a werden in einem Ruhemodus der Redox-Einheit 12a Restgase von Wasserstoff und Sauerstoff in der Redox-Einheit 12a, die in den Gasräumen 70a, 72a verblieben sind, durch die Restgasreinigungseinheiten 20a, 22a von zumindest einer Gasverunreinigung gereinigt. Zudem werden in dem Verfahren zum Betrieb der Redox-Vorrichtung 10a die Eduktgase Wasserstoff und Sauerstoff in einem von dem Ruhemodus verschiedenen Betriebszustand durch die Restgasreinigungseinheiten 20a, 22a von Verunreinigungen gereinigt, indem überschüssiges eingeleitetes Wasserstoffgas und Sauerstoffgas mittels der Pumpen 44a, 46a in den Restgaskreisläufen 60a, 62 von den Gasräumen 70a, 72a über die Restgasreinigungseinheiten 20a, 22a geführt werden, bevor sie den Gasräumen 70a, 72a wieder zugeführt werden.

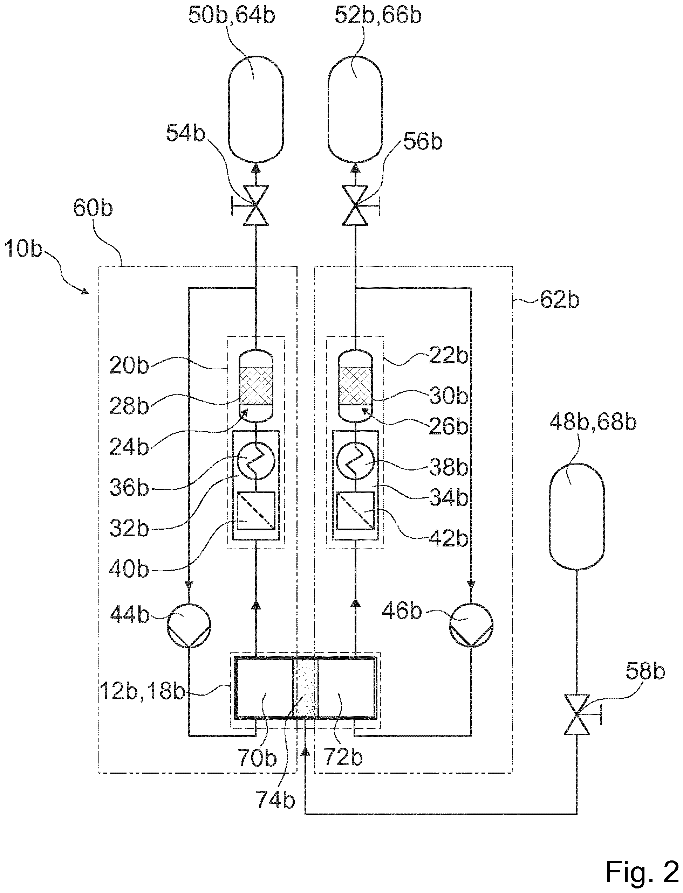

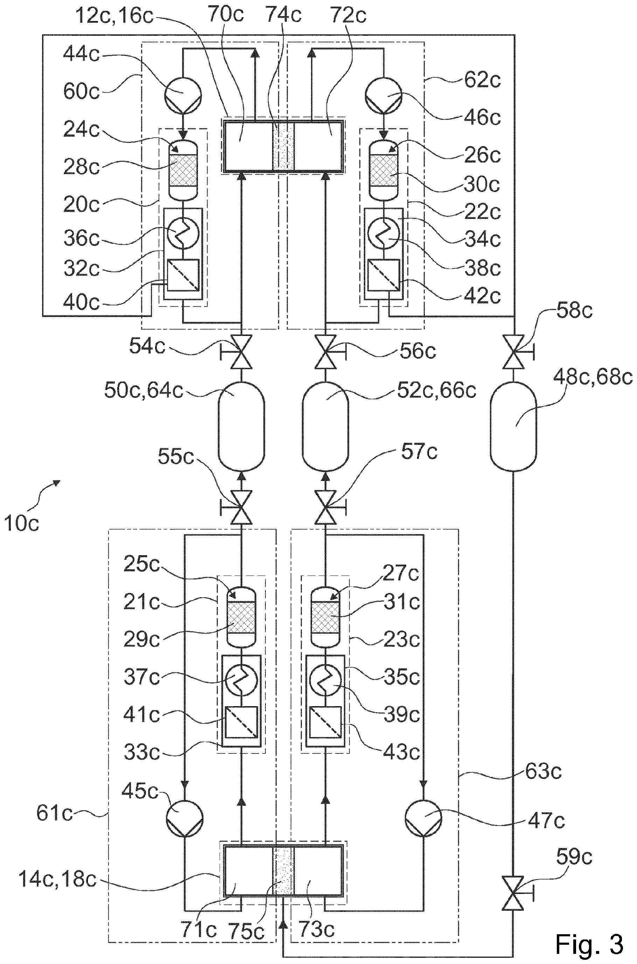

In Fig. 2 und 3 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1, verwiesen wird. Zur Unterscheidung der Ausführungsbeispiele ist der Buchstabe a den Bezugszeichen des Ausführungsbeispiels in der Fig. 1 nachgestellt. In den Ausführungsbeispielen der Fig. 2 und 3 ist der Buchstabe a durch die Buchstaben b und c ersetzt.

Eine in Fig. 2 dargestellte Redox-Vorrichtung 10b, die als Wasserstoff-Sauerstoff-Redox-Vorrichtung ausgebildet ist, umfasst eine als ein alkalischer Elektrolyseur 18b ausgebildete Redox-Einheit 12b, die zur Durchführung einer Redoxreaktion unter Erzeugung von Wasserstoffgas als ein erstes Gas, und von Sauerstoffgas als ein zweites Gas vorgesehen ist, und zwei Restgasreinigungseinheiten 20b, 22b, die analog zu dem vorherigen Ausführungsbeispiel ausgebildet sind und Katalysatoreinheiten 24b, 26b mit Katalysatorelementen 28b, 30b sowie Kondensatabscheider 32b, 34b zur Abscheidung von Wasserdampf mit jeweils einem Wärmetauscher 36b, 38b zu einer Kühlung des Restgases und einem Separator 40b, 42b umfassen. Die Restgasreinigungseinheiten 20b, 22b sind in Restgaskreisläufen 60b, 62b angeordnet, über die Restgas mittels jeweils einer Pumpe 44b, 46b gepumpt wird. Die als alkalischer Elektrolyseur 18b zur Erzeugung von Wasserstoffgas und Sauerstoffgas ausgebildete Redox-Einheit 12b setzt in einer elektrochemischen Redoxreaktion unter Aufwendung elektrischer Energie, die von einer nicht dargestellten äußeren Stromquelle geliefert wird, Wasser aus einem als Wasserspeicher 48b ausgebildeten Speichertank 68b, das dem Elektrolyseur 18b und in diesem einer Membran einer Elektroden-Membran-Elektroden-Anordnung 74b zugeführt wird, in Wasserstoffgas und Sauerstoffgas um, die anschließend in als Wasserstoffspeicher 50b und Sauerstoffspeicher 52b ausgebildeten Speichertanks 64b, 66b gespeichert werden. Die in dem Elektrolyseur 18b durchgeführte Redoxreaktion einer elektrolytischen Spaltung von Wasser stellt eine Umkehrung der in dem vorherigen Ausführungsbeispiel gezeigten Synthese von Wasser aus Wasserstoffgas und Sauerstoffgas dar. In einem Verfahren zum Betrieb der Redox-Vorrichtung 10b werden in einem Ruhemodus der Redox-Einheit 12b Restgase von Wasserstoff und Sauerstoff, die in Gasräumen 70b, 72b der Redox-Einheit 12b verblieben sind, durch die Restgasreinigungseinheiten 20b, 22b von zumindest einer Gasverunreinigung gereinigt. Vor einer Speicherung werden entstandenes Wasserstoffgas und Sauerstoffgas zu einer Reinigung der Produktgase über die Restgasreinigungseinheiten 20b, 22b geführt. Somit werden in dem Verfahren zum Betrieb der Redox-Vorrichtung 10b die Produktgase Wasserstoff und Sauerstoff in einem von dem Ruhemodus verschiedenen Betriebszustand durch die Restgasreinigungseinheiten 20b, 22b von Verunreinigungen gereinigt.

Fig. 3 zeigt eine erfindungsgemäße Redox-Vorrichtung 10c mit einer Redox-Einheit 12c, die zur Durchführung einer Redoxreaktion unter Verbrauch von Wasserstoffgas als ein erstes Gas, und von Sauerstoffgas als ein zweites Gas vorgesehen ist, und mit zumindest einer weiteren Redox-Einheit 14c, die mit der zumindest einen Redox-Einheit 12c stofflich gekoppelt ist. Die erfindungsgemäße Redox-Vorrichtung 10c ist als Wasserstoff-Sauerstoff-Redox-Vorrichtung ausgebildet, die Redox-Einheit 12c und die weitere Redox-Einheit 14c sind als Wasserstoff-Sauerstoff-Redox-Einheiten ausgebildet. Eine stoffliche Kopplung der Redox-Einheit 12c mit der weiteren Redox-Einheit 14c ist dergestalt ausgebildet, dass ein Produkt der Redox-Einheit 12c als Edukt für die weitere Redox-Einheit 14c genutzt wird und Produkte der weiteren Redox-Einheit 14c als Edukte für die Redox-Einheit 12c. Die Redox-Einheit 12c ist als eine alkalische Brennstoffzelle 16c und die weitere Redox-Einheit 14c ist als ein alkalischer Elektrolyseur 18c zur Erzeugung von Wasserstoffgas und Sauerstoffgas ausgebildet. Die Redox-Einheit 12c und die weitere Redox-Einheit 14c sind somit als ein Brennstoffzellen-Elektrolyseur-Paar ausgebildet. Grundsätzlich ist es auch vorstellbar, in einer alternativen Ausbildung zwei weitere Redox-Einheiten 14c vorzusehen, von denen eine zur Erzeugung von Wasserstoffgas und eine andere zur Erzeugung von Sauerstoffgas vorgesehen ist. Die Redox-Vorrichtung 10c ist dazu vorgesehen, abwechselnd die Brennstoffzelle 16c für eine Energieabgabe unter Erzeugung von Wasser aus Wasserstoffgas und Sauerstoffgas und den Elektrolyseur 18c für eine Energieaufnahme unter Verbrauch von Wasser durch Spaltung in Wasserstoffgas und Sauerstoffgas zu betreiben und somit als Akku zu fungieren. Die Redox-Vorrichtung 10c ist für einen geschlossenen Betrieb vorgesehen, in dem über eine Vielzahl von Lade-Entlade-Zyklen unter abwechselndem Betrieb der Brennstoffzelle 16c und des Elektrolyseurs 18c ein Anfangsvorrat an Wasserstoffgas, Sauerstoffgas und Wasser ohne Ergänzung durch äußere Vorräte in einander umgesetzt wird. Die Redox-Einheit 12c und die weitere Redox-Einheit 14c sind über gemeinsame Speichertanks 64c, 66c, 68c verbunden, die jeweils Edukte beziehungsweise Produkte der Redoxreaktionen speichern.

Die Redox-Vorrichtung 10c umfasst vier Restgasreinigungseinheiten 20c, 21c, 22c, 23c, die jeweils in einem Ruhemodus der Redox-Einheit 12c oder der weiteren Redox-Einheit 14c ein Restgas aus einem Gasraum 70c, 71c, 72c, 73c reinigen. Die Restgasreinigungseinheiten 20c, 21c, 22c, 23 umfassen jeweils eine Katalysatoreinheit 24c, 25c, 26c, 27c zu einer Katalyse einer Reaktion von Sauerstoffgas und Wasserstoffgas zu Wasser mit je einem Katalysatorelement 28c, 29c, 30c, 31c, das eine Hohlraumstruktur aufweist, wobei Hohlraumoberflächen mit Platin beschichtet sind. Die Restgasreinigungseinheiten 20c, 21c, 22c, 23c umfassen ferner jeweils einen Kondensatabscheider 32c, 33c, 34c, 35c zu einer Abscheidung von Wasserdampf mit jeweils einem Wärmetauscher 36c, 37c, 38c, 39c und jeweils einem Separator 40c, 41c, 42c, 43c. Die Restgasreinigungseinheiten 20c, 21c, 22c, 23c sind in Restgaskreisläufen 60c, 61c, 62c, 63c angeordnet, in denen mittels Pumpen 44c, 45c, 46c, 47c das Restgas über die Restgasreinigungseinheiten 20c, 21c, 22c, 23c geleitet wird.

Ein Auflade-Entlade-Zyklus der Redox-Vorrichtung 10c wird wie folgt realisiert. In einem ersten Verfahrensschritt wird die Redox-Einheit 12c in einem weitgehenden Ruhemodus und die weitere Redox-Einheit 14c wird in einem von einem Ruhemodus verschiedenen Betriebszustand betrieben. Ein Ventil 59c wird geöffnet, während ein Ventil 58c geschlossen ist, so dass Wasser aus dem als Wasserspeicher 48c ausgebildeten Speichertank 68c über eine Leitung der als Elektrolyseur 18c ausgebildeten weiteren Redox-Einheit 14c zugeführt wird und in der weiteren Redox-Einheit 14c zu einer Elektroden-Membran-Elektroden-Anordnung 75c gelangt, wo es elektrolytisch mittels elektrischen Stroms einer nicht dargestellten äußeren Energiequelle in Wasserstoffgas und Sauerstoffgas gespalten wird. Entstandenes Wasserstoffgas und Sauerstoffgas werden über die Gasräume 71c, 73c und Leitungen mit geöffneten Ventilen 55c, 57c zu den als Wasserstoffspeicher 50c und Sauerstoffspeicher 52c ausgebildeten gemeinsamen Speichertanks 64c, 66c geführt, wobei sie zuvor die Restgasreinigungseinheiten 21c, 23c zu einer Reinigung von Produktgasen durchlaufen. In dem Verfahren zum Betrieb der Redox-Vorrichtung 10c sind die Restgasreinigungseinheiten 21c, 23c somit zu einer Reinigung der Produktgase während eines von dem Ruhemodus verschiedenen Betriebszustands der weiteren Redox-Einheit 14c vorgesehen. Währenddessen wird Restgas in den Gasräumen 70c, 72c der Redox-Einheit 12c in Restgaskreisläufen 60c, 62c mittels der Pumpen 44c, 46c umgewälzt und in den Restgasreinigungseinheiten 20c, 22c gereinigt. Eine Energie für einen Betrieb der Pumpen 44c, 46c kann über die äußere Stromquelle, eine separate äußere oder innere Stromquelle, die beispielsweise von einer Batterie gebildet sein kann, oder über einen Betrieb der Brennstoffzelle 16c mit vorzugsweise geringer Leistung in dem weitgehenden Ruhemodus, welcher durch eine geringfügige Öffnung von Ventilen 54c, 56c bewirkt werden kann, zur Verfügung gestellt werden. In einem weiteren Verfahrensschritt wird die Redox-Einheit 12c in einem Betriebszustand und die weitere Redox-Einheit 14c in einem Ruhezustand betrieben, während die Redox-Vorrichtung 10c mit einem äußeren Stromabnehmer verbunden ist. Die Ventile 55c, 57c, 59c sind in diesem Verfahrensschritt geschlossen, während die Ventile 54c, 56c, 58c geöffnet sind, um Wasserstoffgas und Sauerstoffgas aus dem Wasserstoffspeicher 50c und dem Sauerstoffspeicher 52c in die Gasräume 70c, 72c zu leiten, wo sie in einer Elektroden-Membran-Elektroden-Anordnung 74c mittels einer bereits erläuterten Redoxreaktion unter Stromabgabe zu Wasser reagieren. Entstandenes Wasser wird als Wasserdampf in Gasströmen von Wasserstoffgas und Sauerstoffgas mitgeführt und mittels der Kondensatabscheider 32c, 34c aus den Gasströmen abgeschieden. Abgeschiedenes Wasser wird über Leitungen und das geöffnete Ventil 58c in den als Wasserspeicher 48c ausgebildeten Speichertank 68c geleitet. In diesem Verfahrensschritt werden Restgase in der weiteren Redox-Einheit 14c mittels der Restgasreinigungseinheiten 21c, 23c gereinigt, wobei sie durch die Pumpen 45c, 47c in den Restgaskreisläufen 61c, 63c umgepumpt werden. Eine Energie für einen Betrieb der Pumpen 45c, 47c kann durch eine innere Energiequelle der Redox-Vorrichtung 10c oder bevorzugt von der Brennstoffzelle 16c geliefert werden.

In einem Verfahren zu einem Betrieb der Redox-Vorrichtung 10c werden in einem Ruhemodus der Redox-Einheit 12c oder der weiteren Redox-Einheit 14c Restgase in der Redox-Einheit 12c oder der weiteren Redox-Einheit 14c durch die Restgasreinigungseinheiten 20c, 21c, 22c, 23c von Gasverunreinigungen gereinigt. Ferner wird in einem Verfahren zu einem Betrieb der Redox-Vorrichtung 10c die Redox-Vorrichtung 10c geschlossen betrieben. Insbesondere wird in dem Verfahren zu einem geschlossenen Betrieb der Redox-Vorrichtung 10c die als Brennstoffzelle 16c ausgebildete Redox-Einheit 12c permanent mit zumindest geringer Leistung betrieben, um Energie für einen Betrieb der Pumpen 44c, 45c, 46c, 47c in den Restgaskreisläufen 60c, 61c, 62c, 63c zu liefern. In einem Ruhemodus der Redox-Vorrichtung 10c, in dem die Redox-Vorrichtung 10c weder mit einem äußeren Stromabnehmer noch mit einer äußeren Stromquelle verbunden ist, wird der Elektrolyseur 18c somit in einem Ruhemodus und die Brennstoffzelle 16c wird in einem weitgehenden Ruhemodus betrieben. Der weitgehende Ruhemodus entspricht einem Betriebszustand der Brennstoffzelle 16c, in dem diese lediglich mit einer zu einem Betrieb der Pumpen 44c, 45c, 46c, 47c ausreichenden Leistung betrieben wird, wobei die Leistung einem Dreißigstel einer Leistung in einem Normalbetrieb, in dem die Brennstoffzelle 16c zu einer Stromabgabe an den äußeren Stromabnehmer betrieben wird, entspricht. In einem Ladevorgang der Redox-Vorrichtung 10c, in dem die Redox-Vorrichtung 10c mit einer äußeren Stromquelle verbunden ist und der Elektrolyseur 18c betrieben wird, kann die Brennstoffzelle 16c in dem weitgehenden Ruhemodus oder in einem Ruhemodus betrieben werden, wobei in letzterem Fall die äußere Stromquelle den Pumpen 44c, 45c, 46c, 47c Energie liefert. In einem Betriebsmodus der Brennstoffzelle 16c, in dem die Brennstoffzelle 16c Energie für einen äußeren Stromabnehmer liefert, kann ein Teil des Stroms zu einem Betrieb der Pumpen 44c, 45c, 46c, 47c abgezweigt werden.

Grundsätzlich ist es in einer alternativen Ausgestaltung der Redox-Vorrichtung 10c möglich, Gasströme aus dem Wasserstoffspeicher 50c oder dem Sauerstoffspeicher 52c vor einem Eintritt in die Gasräume 70c, 72c zu reinigen, indem die Gasströme über einen Teil der Restgaskreisläufe 60c, 62c geleitet werden.

### Bezugszeichen

- 10: Redox-Vorrichtung
- 12: Redox-Einheit
- 14: Redox-Einheit
- 16: Brennstoffzelle
- 18: Elektrolyseur
- 20: Restgasreinigungseinheit
- 21: Restgasreinigungseinheit
- 22: Restgasreinigungseinheit
- 23: Restgasreinigungseinheit
- 24: Katalysatoreinheit
- 25: Katalysatoreinheit
- 26: Katalysatoreinheit
- 27: Katalysatoreinheit
- 28: Katalysatorelement
- 29: Katalysatorelement
- 30: Katalysatorelement
- 31: Katalysatorelement
- 32: Kondensatabscheider
- 33: Kondensatabscheider
- 34: Kondensatabscheider
- 35: Kondensatabscheider
- 36: Wärmetauscher
- 37: Wärmetauscher
- 38: Wärmetauscher
- 39: Wärmetauscher
- 40: Separator
- 41: Separator
- 42: Separator
- 43: Separator
- 44: Pumpe
- 45: Pumpe
- 46: Pumpe
- 47: Pumpe
- 48: Wasserspeicher
- 50: Wasserstoffspeicher
- 52: Sauerstoffspeicher
- 54: Ventil
- 55: Ventil
- 56: Ventil
- 57: Ventil
- 58: Ventil
- 59: Ventil
- 60: Restgaskreislauf
- 61: Restgaskreislauf
- 62: Restgaskreislauf
- 63: Restgaskreislauf
- 64: Speichertank
- 66: Speichertank
- 68: Speichertank
- 70: Gasraum
- 71: Gasraum
- 72: Gasraum
- 73: Gasraum
- 74: Elektroden-Membran-Elektroden-Anordnung
- 75: Elektroden-Membran-Elektroden-Anordnung

## Patentansprüche

1. Redox-Vorrichtung, insbesondere Wasserstoff-Sauerstoff-Redox-Vorrichtung mit zumindest einer Redox-Einheit (12a-c, 14c), insbesondere einer Wasserstoff-Sauerstoff-Redox-Einheit, die zur Durchführung zumindest einer Redoxreaktion unter Verbrauch und/oder Erzeugung von einem ersten Gas, insbesondere von Wasserstoffgas, und/oder von einem zweiten Gas, insbesondere von Sauerstoffgas, vorgesehen ist, **gekennzeichnet durch** zumindest eine Restgasreinigungseinheit (20a-c, 21c, 22a-c, 23c), die zumindest in zumindest einem Ruhemodus der Redox-Einheit (12a-c, 14c) zumindest ein Restgas in der Redox-Einheit (12a-c, 14c) von zumindest einer Gasverunreinigung reinigt, wobei die zumindest eine Restgasreinigungseinheit (20a-c, 21c, 22a-c, 23c) zumindest einen Kondensatabscheider (32a-c, 33c, 34a-c, 35c) zur Abscheidung von Wasser umfasst und zumindest einen Restgaskreislauf (60a-c, 61c, 62a-c, 63c) zu einer kontinuierlichen Umwälzung des zumindest einen Restgases in dem Ruhemodus der Redox-Einheit (12a-c, 14c) über die zumindest eine Restgasreinigungseinheit (20a-c, 21c, 22a-c, 23c), wobei der zumindest eine Restgaskreislauf (60a-c, 61c, 62a-c, 63c) zumindest eine Fördereinrichtung zur Umwälzung des Gases, und zwar zumindest eine Pumpe (44a-c, 45c, 46a-c, 47c), umfasst, wobei die zumindest eine Restgasreinigungseinheit (20a-c, 21c, 22a-c, 23c) zumindest eine Einheit umfasst, in der mittels einer Katalyse zumindest eine Gassorte zu zumindest einer weiteren Gassorte umgesetzt wird, wobei die zumindest eine weitere Gassorte zu einer Entfernung aus dem Gasstrom vorgesehen ist.

2. Redox-Vorrichtung nach Anspruch 1, **dadurch gekennzeichnet, dass** die zumindest eine Redox-Einheit (12a; 12c) als eine Brennstoffzelle (16a; 16b) ausgebildet ist.

3. Redox-Vorrichtung nach Anspruch 2, **dadurch gekennzeichnet, dass** die Brennstoffzelle (16a; 16b) als alkalische Brennstoffzelle (16a; 16b) ausgebildet ist.

4. Redox-Vorrichtung nach einem der vorhergehenden Ansprüche, **dadurch gekennzeichnet, dass** die zumindest eine Redox-Einheit (12b; 14c) als Elektrolyseur (18b-c) zur Erzeugung von Wasserstoffgas und/oder Sauerstoffgas ausgebildet ist.

5. Redox-Vorrichtung nach einem der vorhergehenden Ansprüche, **dadurch gekennzeichnet, dass** die zumindest eine Restgasreinigungseinheit (20a-c, 21c, 22a-c, 23c) zumindest eine Katalysatoreinheit (24a-c, 25c, 26a-c, 27c) zu einer Katalyse einer Reaktion von Sauerstoffgas und Wasserstoffgas zu Wasser umfasst.

6. Redox-Vorrichtung nach Anspruch 5, **dadurch gekennzeichnet, dass** die zumindest eine Katalysatoreinheit (24a-c, 25c, 26a-c, 27c) zumindest ein Katalysatorelement (28a-c, 29c, 30a-c, 31c) aufweist, das zumindest teilweise aus einem Platinmetall besteht.

7. Redox-Vorrichtung nach Anspruch 6, **dadurch gekennzeichnet, dass** das zumindest eine Katalysatorelement (28a-c, 29c, 30a-c, 31c) eine Hohlraumstruktur aufweist.

8. Redox-Vorrichtung nach einem der vorhergehenden Ansprüche, **dadurch gekennzeichnet, dass** die zumindest eine Restgasreinigungseinheit (20a-c, 21c, 22a-c, 23c) zu einer Reinigung von zumindest einem Eduktgas oder zumindest einem Produktgas während zumindest eines von dem Ruhemodus verschiedenen Betriebszustands der Redox-Einheit (12a-c, 14c) vorgesehen ist.

9. Redox-Vorrichtung nach einem der vorhergehenden Ansprüche, **gekennzeichnet durch** zumindest eine weitere Redox-Einheit (14c), die mit der zumindest einen Redox-Einheit (12c) stofflich gekoppelt ist.

10. Redox-Vorrichtung nach Anspruch 9, **dadurch gekennzeichnet, dass** die zumindest eine Redox-Einheit (12c) und die zumindest eine weitere Redox-Einheit (14c) als ein Brennstoffzellen-Elektrolyseur-Paar ausgebildet sind.

11. Redox-Vorrichtung nach Anspruch 9 oder 10, **dadurch gekennzeichnet, dass** die zumindest eine Redox-Einheit (12c) und die zumindest eine weitere Redox-Einheit (14c) zumindest über einen gemeinsamen Speichertank (64c, 66c, 68c) verbunden sind.

12. Verfahren zum Betrieb einer Redox-Vorrichtung nach einem der Ansprüche 1-11, insbesondere einer Wasserstoff-Sauerstoff-Redox-Einheit, welche zumindest eine Redox-Einheit (12a-c, 14c), insbesondere eine Wasserstoff-Sauerstoff-Redox-Einheit, aufweist, die zur Durchführung zumindest einer Redoxreaktion unter Verbrauch und/oder Erzeugung von einem ersten Gas, insbesondere von Wasserstoffgas, und/oder von einem zweiten Gas, insbesondere von Sauerstoffgas, vorgesehen ist, **dadurch gekennzeichnet, dass** zumindest in zumindest einem Ruhemodus der Redox-Einheit (12a-c, 14c) zumindest ein Restgas in der Redox-Einheit (12a -c, 14c) durch zumindest eine Restgasreinigungseinheit (20a-c, 21c, 22a-c, 23c) von zumindest einer Gasverunreinigung gereinigt wird.

## Claims

1. Redox apparatus, in particular hydrogen-oxygen redox apparatus, with at least one redox unit (12a-c, 14c), in particular hydrogen-oxygen redox unit, which is configured for carrying out at least one redox reaction consuming and/or producing a first gas, in particular hydrogen gas, and/or a second gas, in particular oxygen gas, **characterised by** at least one residual-gas purification unit (20a-c, 21c, 22a-c, 23c) which purifies, at least in at least one rest mode of the redox unit (12a-c, 14c), at least one residual gas in the redox unit (12a-c, 14c) from at least one gas contamination, wherein the at least one residual-gas purification unit (20a-c, 21c, 22a-c, 23c) comprises at least one condensate precipitator (32a-c, 33c, 34a-c, 35c) for separating off water, and by at least one residual-gas circuit (60a-c, 61c, 62a-c, 63c) for continuous circulation of the at least one residual gas in the rest mode of the redox unit (12a-c, 14c) via the at least one residual-gas purification unit (20a-c, 21c, 22a-c, 23c), wherein the at least one residual-gas circuit (60a-c, 61c, 62a-c, 63c) comprises at least one conveying unit for circulating the gas, namely at least one pump (44a-c, 45c, 46a-c, 47c), wherein the at least one residual-gas purification unit (20a-c, 21c, 22a-c, 23c) comprises at least one unit in which at least one kind of gas is converted into at least one further kind of gas via catalysis, wherein the at least one further kind of gas is provided to be removed from the gas flow.

2. Redox apparatus according to claim 1, **characterised in that** the at least one redox unit (12a; 12c) is implemented as a fuel cell (16a; 16b).

3. Redox apparatus according to claim 2, **characterised in that** the fuel cell (16a; 16b) is implemented as an alkaline fuel cell (16a; 16b).

4. Redox apparatus according to one of the preceding claims, **characterised in that** the at least one redox unit (12b; 14c) is implemented as an electrolyser (18b-c) for producing hydrogen gas and/or oxygen gas.

5. Redox apparatus according to one of the preceding claims, **characterised in that** the at least one residual-gas purification unit (20a-c, 21c, 22a-c, 23c) comprises at least one catalyst unit (24a-c, 25c, 26a-c, 27c) for catalysing a reaction of oxygen gas and hydrogen gas resulting in water.

6. Redox apparatus according to claim 5, **characterised in that** the at least one catalyst unit (24a-c, 25c, 26a-c, 27c) comprises at least one catalyst element (28a-c, 29c, 30a-c, 31c) which is at least partly made of a platinum metal.

7. Redox apparatus according to claim 6, **characterised in that** the at least one catalyst element (28a-c, 29c, 30a-c, 31c) features a hollow-space structure.

8. Redox apparatus according to one of the preceding claims, **characterised in that** the at least one residual-gas purification unit (20a-c, 21c, 22a-c, 23c) is configured for purifying at least one reactant gas or at least one product gas during at least one operating state of the redox unit (12a-c, 14c) which differs from the rest mode.

9. Redox apparatus according to one of the preceding claims, **characterised by** at least one further redox unit (14c), which is materially coupled with the at least one redox unit (12c).

10. Redox apparatus according to claim 9, **characterised in that** the at least one redox unit (12c) and the at least one further redox unit (14c) are implemented as a fuel cell electrolyser pair.

11. Redox apparatus according to claim 9 or 10, **characterised in that** the at least one redox unit (12c) and the at least one further redox unit (14c) are connected at least via a shared storage tank (64c, 66c, 68c).

12. Method for operating a redox apparatus according to one of claims 1 to 11, in particular a hydrogen-oxygen redox unit, comprising at least one redox unit (12a-c, 14c), in particular a hydrogen-oxygen redox unit, which is configured for carrying out at least one redox reaction consuming and/or producing a first gas, in particular hydrogen gas, and/or a second gas, in particular oxygen gas, **characterised in that**, in the redox unit (12a-c, 14c), at least in at least one rest mode of the redox unit (12a-c, 14c), at least one residual gas in the redox unit (12a-c, 14c) is purified from at least one gas contamination by at least one residual-gas purification unit (20a-c, 21c, 22a-c, 23c).

## Revendications

1. Appareil redox, en particulier appareil redox hydrogène-oxygène, avec au moins une unité redox (12a-c, 14c), en particulier une unité redox hydrogène-oxygène, prévue à réaliser au moins une réaction redox en consommation et/ou génération d'un premier gaz, en particulier hydrogène gazeux, et/ou d'un deuxième gaz, en particulier oxygène gazeux, **caractérisé par** au moins une unité à purification de gaz résiduel (20a-c, 21c, 22a-c, 23c) purifiant au moins dans au moins un mode inactif de l'unité redox (12a-c, 14c) au moins un gaz résiduel dans l'unité redox (12a-c, 14c) d'au moins une contamination gazeuse, l'au moins une unité à purification de gaz résiduel (20a-c, 21c, 22a-c, 23c) comprenant au moins un séparateur de condensat (32a-c, 33c, 34a-c, 35c) pour séparer de l'eau, et par au moins un cycle de gaz résiduel (60a-c, 61c, 62a-c, 63c) pour une circulation continue de l'au moins un gaz résiduel dans le mode inactif de l'unité redox (12a-c, 14c), par le biais de l'au moins une unité à purification de gaz résiduel (20a-c, 21c, 22a-c, 23c), l'au moins un cycle de gaz résiduel (60a-c, 61c, 62a-c, 63c) comprenant au moins un dispositif convoyeur pour circuler le gaz, notamment au moins une pompe (44a-c, 45c, 46a-c, 47c), l'au moins une unité à purification de gaz résiduel (20a-c, 21c, 22a-c, 23c) comprenant au moins une unité, dans laquelle au moins une espèce de gaz est convertie dans au moins une autre espèce de gaz par catalyse, l'au moins une autre espèce de gaz étant prévue à être remue du flux gazeux.

2. Appareil redox selon la revendication 1, **caractérisé en ce que** l'au moins une unité redox (12a ; 12c) est implémentée comme une pile à combustible (16a ; 16b).

3. Appareil redox selon la revendication 2, **caractérisé en ce que** la pile à combustible (16a ; 16b) est implémentée comme une pile à combustible alcaline (16a ; 16b).

4. Appareil redox selon l'une quelconque des revendications précédentes, **caractérisé en ce que** l'au moins une unité redox (12b ; 14c) est implémentée comme électrolyseur (18b-c) pour générer d'hydrogène gazeux et/ou oxygène gazeux.

5. Appareil redox selon l'une quelconque des revendications précédentes, **caractérisé en ce que** l'au moins une unité à purification de gaz résiduel (20a-c, 21c, 22a-c, 23c) comporte au moins une unité catalyseur (24a-c, 25c, 26a-c, 27c) pour une catalyse d'une réaction d'oxygène gazeux et hydrogène gazeux résultant en eau.

6. Appareil redox selon la revendication 5, **caractérisé en ce que** l'au moins une unité catalyseur (24a-c, 25c, 26a-c, 27c) comporte au moins un élément catalysant (28a-c, 29c, 30a-c, 31c), lequel consiste au moins partiellement d'un métal platineux.

7. Appareil redox selon la revendication 6, **caractérisé en ce que** l'au moins un élément catalysant (28a-c, 29c, 30a-c, 31c) comporte une structure d'espaces creux.

8. Appareil redox selon l'une quelconque des revendications précédentes, **caractérisé en ce que** l'au moins une unité à purification de gaz résiduel (20a-c, 21c, 22a-c, 23c) est prévue à purifier au moins un gaz de départ ou au moins un gaz produit pendant au moins un état opératif de l'unité redox (12a-c ; 14c) différent du mode inactif.

9. Appareil redox selon l'une quelconque des revendications précédentes, **caractérisé par** au moins une autre unité redox (14c), laquelle est accrochée physicalement avec l'au moins une unité redox (12c).

10. Appareil redox selon la revendication 9, **caractérisé en ce que** l'au moins une unité redox (12c) et l'au moins une autre unité redox (14c) sont implémentées comme une paire de piles à combustible-électrolyseur.

11. Appareil redox selon la revendication 9 ou 10, **caractérisé en ce que** l'au moins une unité redox (12c) et l'au moins une autre unité redox (14c) sont raccordées au moins par un réservoir à stockage (64c, 66c, 68c) commun.

12. Procédé pour fonctionnement d'un appareil redox selon l'une quelconque des revendications 1 à 11, en particulier d'une unité redox hydrogène-oxygène, comprenant au moins une unité redox (12a-c, 14c), en particulier une unité redox hydrogène-oxygène, laquelle est prévue à réaliser au moins une réaction redox en consommation et/ou génération d'un premier gaz, en particulier hydrogène gazeux, et/ou un deuxième gaz, en particulier oxygène gazeux, **caractérisé en ce qu**'au moins dans au moins un mode inactif de l'unité redox (12a-c, 14c) au moins un gaz résiduel dans l'unité redox (12a-c, 14c) est purifié d'au moins une contamination gazeuse par le biais d'au moins une unité à purification de gaz résiduel (20a-c, 21c, 22a-c, 23c).
